# EUROPEAN PATENT APPLICATION

(11) **EP 3 196 820 A1**
(43) Date of publication of application: **26.07.2017**
(21) Application number: 16788629.0
(22) Date of filing: 10.07.2016
(51) Int. Cl.: G06Q 20/32, G06Q 20/20, G06Q 30/06, G06K 7/10, G06K 7/14

(54) **TWO-DIMENSIONAL CODE GENERATION METHOD, INFORMATION PROCESSING METHOD AND INFORMATION SYSTEM**

(30) Priority: 04.12.2015 CN 201510885836
(71) Applicant: Le Holdings (Beijing) Co., Ltd., Beijing 100025 (CN); Le Shi Internet Information & Technology Corp., Beijing, Beijing 100025 (CN)
(72) Inventor: The designation of the inventor has not yet been filed
(74) Representative: Noble, Nicholas
(86) International application number: PCT/CN2016/089511
(87) International publication number: WO 2017/092353

(57) **Abstract**

Embodiments of the present disclosure provide a method for generating a quick response code, an information processing method and device, and an information system. The method for generating a quick response code includes: receiving a quick response code request of a user; obtaining first general information in the quick response code request, to generate first order information; and generating a quick response code according to the first order information. By means of the method for generating a quick response code, the information processing method and device, and the information system provided in the embodiments of the present disclosure, it is implemented that a quick response code identifiable to more payment tools is provided, so that a user does not need to determine which payment tool to be used to perform code scanning, thereby making a payment process more convenient and faster. Meanwhile, costs in aspects of user guidance and business operation are reduced.

## Description

The present disclosure claims priority to Chinese Patent Application No. 201510885836.9, entitled "METHOD FOR GENERATINGQUICK RESPONSE CODE, INFORMATION PROCESSING METHOD AND DEVICE, AND INFORMATION SYSTEM" filed on December 4, 2015, which is incorporated herein by reference in its entirety.

### TECHNICAL FIELD

This application relates to information processing technologies, and particularly to a method for generating a quick response code, an information processing method and device, and an information system.

### BACKGROUND

With the development of terminal technologies, people's consumption patterns keep changing, and offline consumption has gradually developed to online consumption, and people increasingly tend to make payment by terminal devices during shopping. Taking a quick response code payment as an example, in actual application scenarios, the most common code scanning payment applications are, for example, WeChat, and Alipay, etc. At present, quick response codes used for direct payment between various code scanning payment applications cannot be used generally, which therefore causes many inconveniences.

For example, if a user fails to notice that a quick response code is generated by WeChat payment, and scanning code with Alipay payment instead will not succeed in payment. Therefore, the foregoing electronic transaction manners have at least the following problems: in one aspect, a user needs to correspondingly adjust or switch a code scanning application according to an actual case; and in another aspect, a merchant needs to consider how to guide a user to use a payment platform corresponding to a quick response code to scan code, and further needs to consider the presentation and design work for multiple quick response codes on a product, so that operation costs are increased.

### SUMMARY

An objective of embodiments of the present disclosure is to provide a method for generating a quick response code, an information processing method and device, and an information system, so as to provide a quick response code identifiable for more payment tools, thereby improving payment experience of a user.

According to an aspect of an embodiment of the present disclosure, a method for generating a quick response code is provided, including: receiving a quick response code request of a user; obtaining first general information in the quick response code request to generate first order information; and generating a quick response code according to the first order information.

In an embodiment, the method further includes presenting the quick response code by a proxy page.

In an embodiment, the method further includes automatically jumping to the proxy page that presents the quick response code after generation of the quick response code.

In an embodiment, the first general information includes commodity information and/or price information.

According to another aspect of an embodiment of the present disclosure, an information processing method is provided, including: scanning a quick response code to obtain first general information; identifying payment information of a code scanning application; and sending second order information to a server device according to the first general information and the payment information.

In an embodiment, the method further includes jumping to a payment page in response to the second order information.

According to another aspect of an embodiment of the present disclosure, a server device for a quick response code is further provided, including: a request receiving module configured to receive a quick response code request of a user; an order generation module configured to obtain first general information in the quick response code request to generate first order information; and a quick response code generation module configured to generate a quick response code according to the first order information.

In an embodiment, the server device further includes a quick response code presentation module configured to present the quick response code by a proxy page.

In an embodiment, the server device further includes a page jump module configured to after the quick response code is generated, automatically jump to the proxy page that presents the quick response code.

In an embodiment, the first general information includes commodity information and/or price information.

According to another aspect of an embodiment of the present disclosure, a terminal device is further provided, including: a quick response code scanning module configured to scan a quick response code to obtain first general information; a payment recognition module configured to identify payment information of a code scanning application; and an order sending module configured to send second order information to a server device according to the first general information and the payment manner information.

In an embodiment, the terminal device further includes a payment page jump module configured to jump to a payment page in response to the second order information.

According to another aspect of an embodiment of the present disclosure, an information system is further provided, including the server device described in the foregoing embodiments and the terminal device in the foregoing embodiments, where after the server device interacts with the terminal device, the terminal device sends second order information to the server device.

The method for generating a quick response code, the information processing method and device, and the information system provided in the embodiments of the present disclosure, obtain first general information in a received quick response code request to generate first order information, and further generate a quick response code according to the first order information, which achieve to provide a user with a general quick response code adapted to more payment applications, so that a payment process becomes more convenient, and payment experience of a user becomes more desirable. Meanwhile, costs that merchants invest in aspects of user guidance and business operation are reduced.

### BRIEF DESCRIPTION OF THE DRAWINGS

Fig. 1 is a flow chart showing a method for generating a quick response code according to Embodiment 1 of the present disclosure;
Fig. 2 is a flow chart showing an information processing method according to Embodiment 2 of the present disclosure;
Fig. 3 is a logic block diagram showing a server device according to Embodiment 3 of the present disclosure; and
Fig. 4 is a logic block diagram showing a terminal device according to Embodiment 4 of the present disclosure.

### DETAILED DESCRIPTION

A basic concept of the embodiments of the present disclosure is to provide a technical solution in which processing is performed based on first general information in a quick response code request initiated by a user, so as to obtain a universal quick response code. It can be seen that during generating a quick response code, only general information such as commodity information, price information and the like is considered. Therefore, in an aspect, a quick response code provided for a user may be recognized by more payment tools, so that the user does not need to determine which payment tool to be used to perform code scanning, thereby making a payment process more convenient and faster, and improving payment experience of a user. In another aspect, a merchant does not need to consider how to guide a user to use a payment tool corresponding to a quick response code to perform code scanning, thereby greatly reducing the costs in aspects of user guidance and business operation.

A method for generating a quick response code, an information processing method and device, and an information system in exemplary embodiments of the present disclosure are described below in detail with reference to the accompanying drawings.

### Embodiment 1

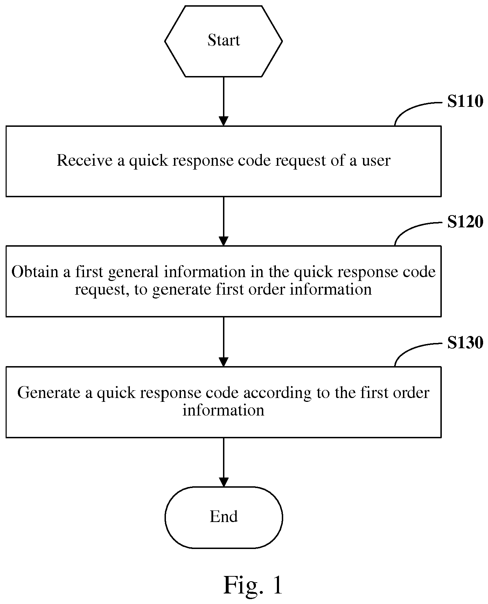

Fig. 1 is a flow chart of a method for generating a quick response code according to Embodiment 1 of the present disclosure. For example, the method may be executed on a server. The server may be a server device of a merchant, for example, Taobao Mall, and Jingdong Mall, etc.

Referring to Fig. 1,in step S110, a quick response code request of a user is received.

In an actual application, after a user logs in to a shopping APP or an H5 page provided by a merchant on a terminal device (for example, a computer, and a mobile phone, etc.) and chooses a commodity, the user may click a code scanning payment button provided on a purchase interface, and therefore a server may receive a quick response code request of the user.

In step S120, a first general information in the quick response code request is obtained, to generate first order information.

It should be noted that the first general information may include commodity information and/or price information. For example, the user chooses a LeTV mobile phone "LE 1s", and the current price information is 1099 Yuan.

In step S130, a quick response code is generated according to the first order information.

Specifically, an existing technology of generating a quick response code may be used, and text information and value information represented by the commodity information and/or price information are recorded *via* a generated graph.

To enable a user to scan a quick response code provided by a server to enter a payment page, further, the method also includes that the quick response code is displayed by a proxy page. After generating the quick response code, the server may automatically jump to the proxy page that displays the quick response code.

The method for generating a quick response code in this embodiment, generates first order information by retrieving first universal information in a received quick response code request and further generates a quick response code according to the first order information.

Compared with prior art, in this embodiment, a quick response code eventually provided for a user is a general quick response code and does not include payment information, which thereby achieves to provide a quick response code recognizable for more payment tools, so that a user does not need to determine which payment tool to be used to perform code scanning, thereby making a payment process more convenient and faster.

In addition, from the perspective of a merchant, there is no need to consider how to guide a user to use a payment tool corresponding to a quick response code to perform code scanning, thereby greatly reducing the costs in aspects of user guidance and business operation.

### Embodiment 2

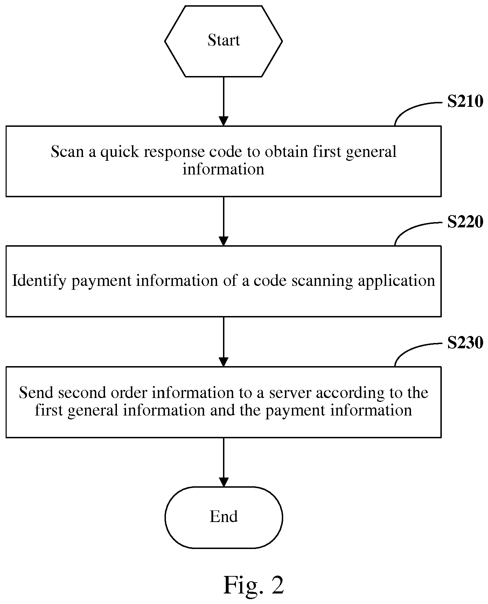

Fig. 2 is a flow chart of an information processing method according to Embodiment 2 of the present disclosure. For example, the method may be executed on a terminal.

Referring to Fig. 2, in step S210, a quick response code is scanned to obtain first general information.

Herein, the first general information may include commodity information and/or price information. Specifically, because a quick response code provided by a server for a terminal device records the first universal information, after scanning code, the terminal device may obtain the commodity information and/or the price information.

In step S220, payment information of a code scanning application is identified.

Specifically, which payment tool used by a user to perform a code scanning operation may be identified, so as to determine a code scanning environment of the user, and the barcode scanning environment of the user represents a payment manner used by the user.

In step S230, second order information is sent to a server device according to the first general information and the payment information.

In the foregoing embodiment, first order information generated by the first general information is not the same as an order in prior art, and does not include the payment information and therefore may be understood as a temporary order. Herein, the payment information is obtained by step S220, that is, at this time, order information is completed. The second order information herein may be understood as complete order information, and the complete order information is sent to a server, so that the server initiates an order request to a third-party payment platform server.

Further, the method also includes jumping to a payment page in response to the second order information. In a specific implementation, the terminal device responds to order information and invokes a third-party payment platform interface (for example, a WeChat payment interface, etc.), so as to facilitate a subsequent payment operation by a user.

The information processing method in this embodiment, according to first general information obtained through code scanning and identified payment information, sends second order information to a server, so that an ordering operation and a payment operation can be completed without determining which payment tool to be used, thereby improving payment experience of a user.

### Embodiment 3

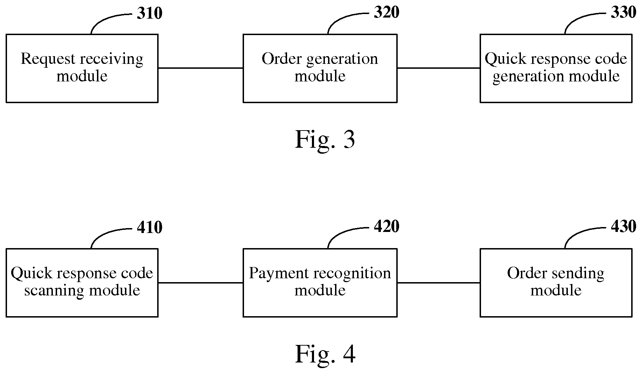

Fig. 3 is a logic block diagram of a server device according to Embodiment 3 of the present disclosure. The server device may be configured to execute the method steps in the embodiment shown in Fig. 1.

Referring to Fig. 3, the server device includes a request receiving module 310, an order generation module 320, and a quick response code generation module 330. The request receiving module 310, the order generation module 320, and the quick response code generation module 330 are sequentially connected.

The request receiving module 310 receives a quick response code request of a user.

The order generation module 320 obtains a first general information in the quick response code request, to generate first order information.

The first general information herein may include commodity information and/or price information.

The quick response code generation module 330 generates a quick response code according to the first order information.

Further, the server device may also include a quick response code presentation module (not shown) that displays the quick response code by a proxy page.

Correspondingly, the server device may further include:
a page jump module (not shown) that automatically jumps to the proxy page that presents the quick response code after the quick response code is generated.

The server device in this embodiment generates first order information by obtaining a first general information in a received quick response code request, and further generates a quick response code according to the first order information. Compared with the prior art, in this embodiment, a quick response code eventually provided for a user is a universal quick response code and does not include payment information, which thereby achieves to provide a quick response code recognizable for more payment tools, so that a user does not need to determine which payment tool to be used to perform code scanning, thereby making a payment process more convenient and faster. Meanwhile, costs in aspects of user guidance and business operation are reduced.

### Embodiment 4

Fig. 4 is a logic block diagram of a terminal device according to Embodiment 4 of the present disclosure. The terminal device may be configured to execute the method steps in the embodiment shown in Fig. 2.

Referring to Fig. 4, the terminal device includes a quick response code scanning module 410, a payment recognition module 420, and an order sending module 430. The quick response code scanning module 410, the payment recognition module 420, and the order sending module 430 are sequentially connected.

The quick response code scanning module 410 scans a quick response code to obtain first general information.

The payment manner recognition module 420 identifies payment information of a code scanning application.

The order sending module 430 sends second order information to a server device according to the first universal information and the payment information.

As an optional implementation of this embodiment, the terminal device may further include a payment page jump module (not shown) that jumps to a payment page in response to the second order information.

The terminal device in this embodiment, according to first general information obtained through code scanning and identified payment information, sends second order information to a server device, so that an ordering operation and a payment operation can be completed without determining which payment tool to be used, thereby improving payment experience of a user.

### Embodiment 5

An information system includes the server device in the foregoing Embodiment 3 and the terminal device in the foregoing Embodiment 4. After the server device interacts with the terminal device, the terminal device sends second order information to the server device. Compared with prior art, the information system in this embodiment has the following technical effects:
in an aspect, a user is provided with a quick response code recognizable for more payment tools, so that the user does not need to determine which payment tool to be used to perform code scanning, thereby making a payment process more convenient and faster, and greatly improving payment experience of a user; and
in another aspect, a merchant does not need to consider how to guide a user to use a payment tool corresponding to a quick response code to perform code scanning, thereby lowering costs in aspects of user guidance and business operation.

It should be noted that according to the needs of implementations, each part/step described in this application may be divided into more parts/steps, and also two or more parts/steps or some operations of parts/steps may be combined into a new part/step, so as to achieve the objective of the embodiments of the present disclosure.

The foregoing method according to the embodiments of the present disclosure may be implemented in hardware or firmware, or may be implemented as software or computer code that can be stored in a recording medium (for example, a CD ROM, a RAM, a floppy disk, a hard disk or a magneto-optical disc), or may be implemented as computer code downloaded from a network that is originally stored in a remote recording medium or a non-transitory machine readable medium and will be stored in a local recording medium. Accordingly, the method described herein can be processed by such software that is stored in a recording medium that uses a general-purpose computer, a special-purpose processor or programmable or special-purpose hardware (for example, an ASIC or an FPGA). It may be understood that a computer, a processor, a microprocessor controller or programmable hardware includes a storage component (for example, a RAM, a ROM, and a flash memory, etc.) that can store or receive software or computer code. When the software or computer code is accessed and executed by the computer, the processor or the hardware, the processing method described herein is implemented. In addition, when the general-purpose computer accesses the code that is used for implementing processing shown herein, execution of the code converts the general-purpose computer to a special-purpose computer configured to execute the processing shown herein.

The foregoing descriptions are merely specific implementation manners of the embodiments of the present disclosure, but the protection scope of the present disclosure is not limited thereto. Any variation or replacement that can be readily conceived of by a person skilled in the art within the technical scope of the present disclosure should fall within the protection scope of the present disclosure. Therefore, the protection scope of the present disclosure should be defined by the claims.

## Claims

1. A method for generating a quick response code, comprising:
receiving a quick response code request of a user;
obtaining a first general information in the quick response code request, to generate a first order information; and
generating a quick response code according to the first order information.

2. The method according to claim 1, wherein the method further comprises:
displaying the quick response code by a proxy page.

3. The method according to claim 2, wherein the method further comprises:
automatically jumping to the proxy page displaying the quick response code, after the quick response code is generated.

4. The method according to claim 1, 2 or 3, wherein the first general information comprises commodity information and/or price information.

5. An information processing method, comprising:
scanning a quick response code to obtain first universal information;
identifying payment manner information of a code scanning application; and
sending second order information to a server device according to the first general information and the payment information.

6. The method according to claim 5, wherein the method further comprises:
in response to the second order information, jumping to a payment page.

7. A server device, comprising:
a request receiving module configured to receive a quick response code request of a user;
an order generation module configured to obtain first general information in the quick response code request, to generate first order information; and
a quick response code generation module configured to generate a quick response code according to the first order information.

8. The server device according to claim 7, wherein the server device further comprises:
a quick response code presentation module configured to present the quick response code by a proxy page.

9. The server device according to claim 8, wherein the server device further comprises:
a page jump module configured to automatically jump to the proxy page displaying the quick response code after the quick response code is generated.

10. The server device according to any one of claims 7 to 9, wherein the first general information comprises commodity information and/or price information.

11. A terminal device, comprising:
a quick response code scanning module configured to scan a quick response code to obtain first general information;
a payment recognition module configured to identify payment information of a code scanning application; and
an order sending module configured to send second order information to a server device according to the first general information and the payment information.

12. The terminal device according to claim 11, wherein the terminal device further comprises:
a payment page jump module configured to jump to a payment page in response to the second order information.

13. An information system, comprising the server device according to any one of claims 7 to 10 and the terminal device according to claim 11 or 12, wherein after the server device interacts with the terminal device, the terminal device sends second order information to the server device.
